# EUROPEAN PATENT APPLICATION

(11) **EP 3 525 279 A1**
(43) Date of publication of application: **14.08.2019**
(21) Application number: 18156053.3
(22) Date of filing: 09.02.2018
(51) Int. Cl.: H01M 10/48

(54) **THERMISTORS ON FLEXIBLE LAYERS AND ITS USE FOR TEMPERATURE MEASUREMENTS WITHIN A BATTERY PACK**

(71) Applicant: Nederlandse Organisatie voor toegepast- natuurwetenschappelijk onderzoek TNO, 2595 DA 's-Gravenhage (NL)
(72) Inventor: ZALAR, Peter, 2595 DA's-Gravenhage (NL); SMITS, Edsger Constant Pieter, 2595 DA's-Gravenhage (NL); KARDAN, Helen, 2595 DA's-Gravenhage (NL); UNNIKRISHNAN, Sandeep, 2595 DA's-Gravenhage (NL)
(74) Representative: V.O.

(57) **Abstract**

The invention shows a battery pack for an electric vehicle including battery cells and temperature sensors configured to at least provide temperature measurements at different locations of the battery pack. A plurality of temperature sensors are printed on a flexible foil, the plurality of temperature sensors forming distributed measurement points in spaced apart relation to each other over a measurement surface area of the flexible foil, wherein the plurality of temperature sensors have a thermistor structure with a temperature dependent resistance. The flexible foil is integrated within the battery pack and is configured to cover with its measurement surface area at least a portion of a plurality of battery cells within the battery pack. The invention also describes a method for performing temperature measurements within a battery pack, and for heating a battery pack.

## Description

### FIELD OF THE INVENTION

The invention relates to a battery pack, e.g. for an electric vehicle or power storage device, including battery cells and temperature sensors configured to at least provide temperature measurements at different locations of the battery pack. Further, the invention relates to a method for providing temperature measurements within a battery pack of an electric vehicle. The invention also relates to a method for heating a battery pack.

### BACKGROUND TO THE INVENTION

One of the application areas for power storage devices are electric vehicles that at least partially uses energy stored in a rechargeable battery pack for propulsion. Examples are a battery vehicle and a hybrid vehicle. The temperature of the battery pack is an important parameter influencing, among other things, the energy storage, performance, operating efficiency and safety.

Passing a safe operational temperature range of a battery pack, and/or its individual battery cells, may be unsafe. For instance, lithium-ion batteries, which are commonly used in battery packs in electric vehicles, can become damaged if operated above a damage temperature (e.g. higher than 65°C), as a result of thermal runaway. This safety threshold is determined by the properties of the liquid electrolyte used in today's lithium-ion batteries.

During operation, and especially during charging of the battery cells of the battery pack, measures are taken for preventing the battery package reaching damage temperatures. In order to limit the charging time of an electric vehicle during the charging process, there is a constant desire to accelerate recharging of the batteries in the battery pack. However, as a consequence of fast charging speeds during a charging process, a large amount of heat can be generated.

A safe regime can be employed where the temperature problems are not encountered. For instance, for safety purposes, the temperature at the charging site can be continuously checked. Furthermore, heat exchange systems for cooling (conduction-based or convection-based) can be used for preventing damage to the battery cells within the battery pack. The heat exchange system can be placed around or within the battery pack.

Currently, temperatures in an electric vehicles battery pack are assessed using sensors placed on an (outer) surface of the battery pack with subsequent estimation of the internal temperature. The employed temperature sensors in electric vehicle batteries are typically silicon based, e.g. having PCB boards. Normally the battery pack comprises a limited amount of temperature sensors, such as for example a temperature sensor on in/outside a housing of the battery pack or at the terminal(s) of the battery pack. By means of simulations and thermal modelling, the temperature distribution may be estimated based on the measured temperature by the limited amount of temperature sensors. Much information may need to be extrapolated from one (or a limited number of) measured temperature value(s), which deteriorates accuracy and hence safety during operation. Moreover, placing a large number of individual sensor components may not be feasible. When the number of temperature sensors in the battery pack is increased, the wired communication to each of these temperature sensors can create an extensive cluster of wires, making the system unreliable, expensive and complex. Moreover, the sensors and the wires can take a large volume. Fiber-Bragg gratings can also be used for temperature monitoring, however, the high price of such optical sensors does not allow it to be used in a large scale in the battery pack of the electric vehicle.

Therefore, there is a need for improving temperature measurements of a battery pack for an electric vehicle, which can be important for i.a. safety, performance, efficiency and longevity. Furthermore, solid-state batteries may have a poor power-performance at low temperature, in some cases requiring heating up, for instance when the temperature is below zero (e.g. below -5°C).

### SUMMARY OF THE INVENTION

It is an object of the invention to provide for a method and a system that obviates at least one of the above mentioned drawbacks.

Additionally or alternatively, it is an object of the invention to improve the performance, efficiency and/or the life time of a battery pack.

Additionally or alternatively, it is an object of the invention to obtain improved temperature measurements in a battery pack of an electric vehicle.

Additionally or alternatively, it is an object of the invention to obtain a battery package which can be heated up counteracting poor power-performance at low temperatures.

Thereto, the invention provides for a battery pack wherein a plurality of resistors are printed on a flexible foil; the plurality of resistors formed in a distributed fashion in a spaced apart relation to each other over a surface area of the flexible foil. The plurality of resistors have a temperature dependent resistance. The flexible foil is integrated within the battery pack and is configured to cover with its surface area at least a portion of a plurality of battery cells within the battery pack. A controller is coupled to the plurality of resistors to control the battery cells in the battery pack as function of sensed resistance values.

The flexible foil with the plurality of printed thermistor temperature sensors can be easily integrated within the battery pack. The flexible foil can be foldable/bendable enabling a fitting integration within the battery pack. A good conformity to the shape of the plurality of battery cells is allowed by the flexibility of the flexible foil. By employing the flexible foil with sensors, a large amount of measurement points can be obtained within the battery pack, at least including a plurality of temperature measurement points. Printing the temperature sensors can facilitate the integration of temperature sensors in the battery pack, reducing for instance the manufacturing cost. Advantageously, the flexible foil can be very thin, such that the volume needed for enabling distributed temperature measurements within the battery pack can also be reduced. Additionally, or alternatively, the size of temperature sensors can be effectively reduced using the printed thermistor temperature sensors on the flexible foil. Printing the temperature sensors enables further miniaturization. The measurements provided by the flexible foil can be used as a benchmarking and/or diagnostic tool. Additionally or alternatively, the measurements can be used for controlling operational parameters of the electric vehicle. In an embodiment, the resistors are provided as positive temperature constant resistors, wherein, in case of normal heating, the positive constant resistors do not exceed a threshold resistance value, and in case of overheating of a battery cell, the positive constant resistor exceeds a threshold resistive value, a resistive network is shut off by the controller.

Other quantities next to the temperature can also be measured by means of the flexible foil, using the same printed thermistor temperature sensors on the flexible foil and/or different printed sensors on the flexible foil.

The sensors may be obtained by means of printing conductive composite material on the flexible foil. Other materials may also be used for printing the sensor. Instead of mounting the individual components for the sensors on a surface, the manufacturing process can be significantly facilitated by means of printing the sensors on the flexible foil. Also electrodes, contacts and/or wiring can be printed on the flexible foil (e.g. silver printing). The flexible foil may for instance be a plastic substrate on which the sensors are printed, for instance by screen printing. Interdigitated electrodes can be configured to enable the measurement of an electrical resistance in the thermistor temperature sensor, indicative of the temperature. A changing resistance can be indicative of a changing temperature at the thermistor sensor. The sensors may be calibrated in order to accurately couple the monitored resistance to the temperature. Optionally, the printed temperature sensors on the flexible foil are negative temperature coefficient thermistors.

The plurality of battery cells can be at least partially wrapped with the flexible foil, for enabling direct or indirect contact with each of the plurality of battery cells. By means of the flexible foil with the plurality of sensors, a plurality of the battery cells within the battery pack can be directly monitored (at least including temperature measurements). In this way, an accurate temperature distribution within the battery pack may be determined.

By means of the flexible foil, a large amount of measurement points can be obtained, e.g. two hundred sensing measurement points or more. High sensor densities can be obtained, while providing a simple fabrication and readout. Advantageously, the wiring to the plurality of thermistor temperature sensors (and optionally for other printed sensors or elements) can be integrated in the flexible foil. Different readout layouts are possible for obtaining measurements for the plurality of sensors of the flexible foil.

The plurality of temperature sensors on the flexible foil can be arranged for providing uniform distributed measurement points over the measurement surface area. This can be achieved in an accurate and easy way by means of printing the thermistor temperature sensors on the flexible foil.

The flexible foil can be arranged to fittingly wrap around at least a portion of the plurality of battery cells. In an example, the flexible foil extends along at least a side portion of the plurality of battery cells. The flexible foil can be sandwiched between portions of the plurality of battery cells. The battery cells are allowed to have different shapes. Typically, battery cells are cylindrically shaped, however, other shapes are also possible such as pouches.

Optionally, the plurality of temperature sensors on the flexible foil form a temperature sensor array such that the distributed measurement points form a measurement grid. The temperature sensors can be printed on the flexible foil forming an array of rows and/or columns. The measurement points may for example be equally spaced in a matrix providing a measurement resolution in the measurement surface area. A high resolution of measurement points on the flexible foil can be obtained. Advantageously, the flexible foil including the plurality of temperature sensors in a grid arrangement can enable simultaneous or quasi-simultaneous measurement of temperatures at different locations of the battery pack at once. The temperature sensor grid arrangement can be obtained by printing a grid of sensors on the flexible foil, making it easy to manufacture, cheap and practical for integration within the battery pack.

By means of the flexible foil with the plurality of thermistor temperature sensors, integrated within the battery pack, an inside temperature distribution of the battery pack can be accurately estimated. Additionally, next to the temperature distribution within the battery pack, also a temperature distribution on the outside of the battery pack can be obtained by means of one or more flexible foils attached thereto. Optionally, the battery pack enclosure is further wrapped in a flexible foil including at least a plurality of printed temperature sensors. In this way, a bottom, side and top temperature distribution may also be determined.

Optionally, the flexible foil is integrated with or coupled to a heat exchanging member, wherein the heat exchanging member is arranged to snuggly fit around the plurality of battery cells such as to remove heat from the plurality of battery cells.

The heat exchanging member can be positioned to provide for a good thermal contact with the plurality of battery cells, from which heat is to be removed. The heat exchanging member can be used for effectively relieving thermal stresses from the battery cells within the battery pack. For example, the heat exchanging member may be a heat sink in thermal connection with the plurality of the battery cells. By integration or coupling of the flexible foil to the heat exchanging member, a direct measurement of temperatures between the heat exchanging member and the battery cells is enabled. In an example, the flexible foil is integrally formed with the heat exchanging member. The flexible foil integrated with or coupled to the heat exchanging member may be much smaller and lighter than a conventional heat sink while allowing at least distributed temperature measurements. It may use less material and have less stringent machining requirements, so it may be much more economical to fabricate and use.

Optionally, the plurality of temperature sensors of the flexible foil are printed directly onto the heat exchanging member. In an advantageous embodiment, the heat exchanging member acts as the flexible foil, for example forming a heat sink foil. The sensors and wiring may be printed directly on the heat exchanging member. An additional layer may be disposed on one or more portions of the heat exchanging member (e.g. thermal insulation or separation material). The flexible foil and/or heat exchanging member can be single layered or multilayered.

The flexible foil with the thermistor temperature sensors can provide a distributed temperature sensing system for use near a cooling circuit arrangement in the battery pack. For example, the flexible foil may act as a cooler (e.g. heat sink foil) and/or the flexible foil can be combined with or integrated with an active or a passive cooler arranged within the battery pack.

Optionally, the plurality of temperature sensors are switchable between a sensing state, in which the temperature sensors are used for measuring a value indicative of a temperature, and a heating state, in which the temperature sensors are used as heating elements for heating the battery pack.

Hence, the plurality of temperature sensors can selectively be used as (resistive) heating elements. In some cases (e.g. very low ambient temperatures), heating up battery cells, for example in case of a solid-state battery pack, can be beneficial for the performance and/or efficiency provided by the battery pack.

Optionally, a plurality of heating elements, different than the plurality of thermistor temperature sensors, are printed on the flexible foil. If the flexible foil is connected to and integrated with a heat exchanging member (e.g. heat sink), the heat can more evenly be distributed to the plurality of thermistor temperature sensors.

Optionally, within the measurement surface area of the flexible foil, a first group of a plurality of sensors of the flexible foil is configured to provide temperature measurements, and a second group of a plurality of sensors of the flexible foil is configured to provide pressure measurements.

The flexible foil with a plurality of sensors can be arranged within the battery pack to define a path between the battery cells for running from one battery cell to a next battery cell of the plurality of battery cells so that the flexible foil is brought into direct or indirect contact with each of the plurality of battery cells being monitored by means of said flexible foil with plurality of sensors.

Other groups, e.g. a third group, a fourth group, etc., may also be included, such as for example comprising heating elements. Alternatively, the second group of plurality of sensors on the flexible foil may be configured to provide measurements of different quantities than pressure measurements.

Optionally, the flexible foil is guided in a meandering path alternatingly around battery cells.

The flexible foil can be easily twisted, turned, or winded for covering at least a portion of a plurality of battery cells within the battery pack with its measurement surface area. The flexible film can be successively guided along curves in one or more rows along a series of consecutive battery cells.

The flexible foil can be intertwined in a section of the battery pack, for example following a meandering path sandwiched between battery cells, and provide by means of distributed temperature measurements improved thermal management and safety.

In an example, the flexible foil is shaped to form a sinusoidal path between the plurality of battery cells. The flexible foil, arranged between the plurality of battery cells within the battery pack, can be curved in such a way that a plurality of semicircular parts of mutually opposite directions of curvature connected in consecutive succession are formed. Optionally, the flexible foil is integrally and contiguously connected with the heat exchanging member.

Optionally, the heat exchanging member may include a metal plate which may be guided in a meandering path alternatingly around the plurality of battery cells. The flexible foil, integrated with or connected to the heat exchanging member, may act on an area of circumference of the plurality of battery cells. Furthermore, optionally, the heat exchanging member may act as the flexible foil (e.g. heat sink foil being the flexible foil). However, it is also possible that the flexible foil and heat exchanging member are separate components.

Optionally, the battery pack comprises at least one row of battery cells, the battery cells having a cylindrical shape and being placed consecutively next to each other in the at least one row, wherein the flexible foil is curved along an alternating side of the successive battery cells in the at least one row.

The flexible foil effectively allows wrapping the printed sensors around one or more portions of the plurality of battery cells. In this way, at least temperature measurements can be carried out at a battery cell level. The sensors printed on the flexible foil are integrated inside the package. Optionally, an internal and/or external side of an outer portion of the battery pack (e.g. enclosure) can be wrapped by means of the flexible foil.

Optionally, the plurality of battery cells are arranged into at least a first row and an adjacent second row, the first and second rows being offset from each other, wherein the flexible foil is interposed at least between the first row and the second row.

The flexible foil with sensors can be arranged between plurality of battery cells stacked standing next to each other in the battery pack (e.g. in a plurality of modules). The battery cells in the first row and the battery cells in the second row may be disposed adjacent each other and/or in even substantially abutting relationship with respect to each other. The flexible foil including the plurality of sensors can be arranged in abutting relationship with the plurality of battery cells. Other configurations are also possible. The flexible foil can be guided from one or more battery cells in the first row to one or more battery cells in the second row, and/or vice versa.

Optionally, the flexible foil follows a complementary shape with respect to at least a portion of the plurality of battery cells for extending along at least a portion of an outer contour of the plurality of battery cells.

The flexible foil can be positioned between the plurality of battery cells in the battery pack with the measurement surface area facing at least a portion of each of plurality of battery cells with which it is coupled. In an example the battery cells of the battery pack are stacked next to each other complementary positioned with respect to each other, with the flexible foil including the plurality of sensors following a meandering path between the plurality of battery cells. The flexible foil with the plurality of sensors can be positioned in a space between the battery cells. Hence, no additional space may be required in the battery pack. In this way, the battery cells may provide a support for holding the flexible foil with the plurality of sensors in place.

A relative distance between the plurality of battery cells can be arranged to provide a space in which the flexible foil with the plurality of sensors, and/or the heat exchanging member, can be fittingly placed. This space may at least partially be formed between two or more battery cells positioned in the battery pack. For example, the space may be precisely dimensioned for receiving the heat exchanging plate and/or flexible foil, such as to provide fixation (i.e. complementary shaped).

Optionally, the heat exchanging member is a cooling plate providing at least passive cooling by dissipating generated heat away from battery cells within the battery pack.

In an example, an indirect coupling of the flexible foil to at least a subset of the plurality of battery cells is obtained by attaching or integrating the flexible foil to the heat exchanging member. The heat exchanging member can be configured to act as the flexible foil on which at least the plurality of thermistor temperature sensors are printed.

Optionally, the heat exchanging member is a multilayer sheet comprising at least one (thermally) conductive layer. In an example, the heat exchanging member is a (metal) heat sink foil comprising one or more flexible copper foils. Various shapes and dimensions are possible. The heat exchanging member may have electrically insulating coatings on one or both major surfaces.

Optionally, the heat exchanging member is configured to provide at least active cooling by means of a cooling fluid, wherein the heat exchanging member comprises at least one channel configured to enable cooling fluid to flow therethrough.

The cooling fluid can for instance be a liquid, such as for example a coolant (e.g. glycol). It is envisaged that heat pipe systems can also be employed for cooling the battery cells of the battery pack. Typically, heat pipes can significantly enhance the heat transfer and hence the cooling effect. The heat exchanging member can be coupled to a vehicle battery cooling system.

Optionally, the battery pack includes a plurality of flexible foils.

The flexibility of the flexible foil allows folding and deformation enabling attachment or coupling to battery cells with curved surfaces (e.g. cylinder shaped battery cells). Hence, less space may be taken by the temperature monitoring equipment within the battery pack, while the temperatures can more accurately be monitored at a battery cell level.

Optionally, a temperature distribution in the battery pack is mapped in real time using the flexible foil with the plurality of sensors. A number of bus lines on the flexible foil can be reduced by using readout schemes (passive/active matrix).

Optionally, the flexible foil comprises an adhesive on at least one side. In this way, the flexible foil can be adhesively secured to at least a portion of the exterior of the plurality of battery cells and/or to the heat exchanging member. The adhesive can for instance be a thermal adhesive such as thermal paste.

The battery pack may comprise an enclosure having one or more outer surfaces (e.g. six). Optionally, one or more outer surfaces of the enclosure are covered by the flexible foil including the sensors. The temperatures within the battery pack can be estimated using the monitored values at one or more outer surfaces of the battery pack.

According to a further aspect, the invention provides for a method for providing temperature measurements within a battery pack of an electric vehicle, the battery pack including battery cells and temperature sensors configured to at least provide temperature measurements at different locations of the battery pack. The method comprises providing a flexible foil with a plurality of temperature sensors printed thereon. The plurality of temperature sensors form distributed measurement points in spaced apart relation to each other over a measurement surface area of the flexible foil. The plurality of temperature sensors have a thermistor structure with a temperature dependent resistance. The method further comprises covering, with the measurement surface area of the flexible foil, at least a portion of a plurality of battery cells within the battery pack to thereby measure temperature at different locations within the battery pack.

The temperature distribution within the battery pack can vary during use. For instance, during charging of the battery cells of the battery pack, the highest temperature often occurs at or near the contact leads of the battery pack. Localized high temperatures within the battery pack can also occur at a failing battery cell within the battery pack. The invention enables monitoring the battery pack at battery cell level using a flexible foil with at least temperature sensors so that temperatures nearing a failure temperature can be timely identified. In this way, the use of the battery can be stopped in time, avoiding damage and safety hazards.

The flexible foil including the plurality of temperature sensors provides a feasible solution for obtaining a large amount of measurement locations in the battery pack, which can improve the accuracy of the measured temperature distribution of the battery pack. Hence, the thermal management and/or the operational safety of the battery pack can be effectively improved.

The plurality of sensors can be printed on a flexible substrate of the flexible foil, the sensors forming a grid of measurement points for measuring at least the temperature over the measurement surface area. Other quantities can also be measured, for instance a pressure. The measurement surface area of the flexible foil with plurality of sensors can cover the plurality of battery cells directly or indirectly.

Optionally, the flexible foil with the sensors is used for, if necessary, heating up the battery cells within the battery pack. Heating up the battery pack to an appropriate temperature may be beneficial under certain conditions with low temperatures. Additionally or alternatively, other elements may also be printed on the flexible foil, such as for example heating elements dedicated to generate heat (e.g. electrical resistance heating converting incoming electrical energy to heat).

The electrical elements printed on the flexible foil (e.g. thermistor temperature sensors, optional pressure sensors, and optional heating elements) can be arranged in a structured fashion in one or more rows and/or columns.

Optionally, the flexible foil is integrated with or coupled to a heat exchanging member wherein the heat exchanging member is arranged to snuggly fit around the plurality of battery cells such as to remove heat from the plurality of battery cells. The heat exchanging member may be a (cooling) plate acting as a heat sink. For example, a metal plate or foil (e.g. copper or aluminum) can be employed as the heat sink.

According to a further aspect, the invention provides for a method for heating a battery pack of an electric vehicle, the battery pack including battery cells and temperature sensors configured to at least provide temperature measurements at different locations of the battery pack, wherein a plurality of temperature sensors are printed on a flexible foil, the plurality of temperature sensors forming distributed measurement points in spaced apart relation to each other over a measurement surface area of the flexible foil, and wherein the flexible foil is integrated within the battery pack and is configured to cover with the measurement surface area at least a portion of a plurality of battery cells within the battery pack, wherein the plurality of temperature sensors have a thermistor structure with a temperature dependent resistance, wherein the method further includes: determining an indicative value for a temperature within the battery pack; determine whether the indicative value for the temperature within the battery pack is lower than a threshold value, indicating that heating of the battery pack is desired; and employing the plurality of temperature sensors as heating elements for heating the battery pack.

According to a further aspect, the invention provides for a flexible foil comprising a plurality of printed sensors according to the invention.

The flexible foil including the plurality of printed temperature sensors can be easily integrated in the battery pack. In an example, the flexible foil is directly integrated on one or more battery cells of the battery pack.

Advantageously, the flexible foil with the plurality of sensors can be obtainable by means of a roll-to-roll fabrication process.

It will be appreciated that the plurality of battery cells of the battery pack may be a subset of battery cells of the total set of battery cells arranged in the battery pack. It will be appreciated that a plurality of flexible foils can be employed, wherein a first flexible foil is brought into (direct or indirect) contact with a first subset of plurality of battery cells of the battery pack and a second flexible foil is brought into (direct or indirect) contact with a second subset of plurality of battery cells of the battery pack. The first subset of the plurality of battery cells can be different or the same as the second subset of plurality of battery cells.

It will be appreciated that the described arrangement of the flexible foil on and/or within the battery pack may also apply to the arrangement of the heat exchanging member on which the flexible foil is integrated or to which the flexible foil is attached.

It will be appreciated that a battery pack may include battery cells within modules each having a number of battery cells. For instance, a battery pack may include seven thousand battery cells, with e.g. sixteen modules with each having one hundred forty battery cells. Many variants are possible, for instance including a larger number or a smaller number of battery cells and/or modules. The battery cells within the battery pack may be cylindrically shaped. Many shapes and dimensions are possible.

Furthermore, the flexible foil and/or heat exchanging member can also be integrally formed with the plurality of battery cells.

It will be appreciated that any of the aspects, features and options described in view of the methods apply equally to the battery pack and the described flexible foil with sensors printed thereon. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a flexible foil with a printed thermistor temperature sensor;
Fig. 2 shows a schematic diagram of an embodiment of a flexible foil with printed thermistor temperature sensors;
Fig. 3 shows a schematic diagram of an embodiment of a flexible foil with printed thermistor temperature sensors;
Fig. 4 shows a schematic diagram of an embodiment of a flexible foil with printed sensors;
Fig. 5 shows a cross-sectional view of an embodiment of a flexible foil integrated with a heat exchanging member;
Fig. 6 shows a schematic diagram of a circuit involving a plurality of sensors;
Fig. 7 shows a top schematic view of an embodiment of a flexible foil with printed sensors wrapped around a plurality of battery cells;
Fig. 8 shows a top schematic view of an embodiment of a flexible foil with printed sensors wrapped around a plurality of battery cells;
Fig. 9 shows a top schematic view of an embodiment of a flexible foil with printed sensors wrapped around a plurality of battery cells;
Fig. 10 shows a schematic diagram of a method for providing temperature measurements in a battery pack; and
Fig. 11 shows a schematic diagram of a method for heating a battery pack.

### DETAILED DESCRIPTION

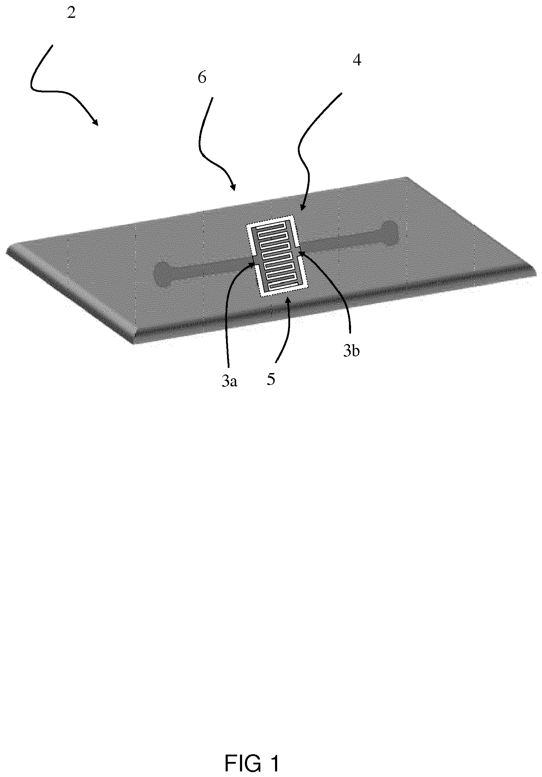

Fig. 1 shows a schematic diagram of an embodiment of a flexible foil 2 with a printed thermistor temperature sensor 4. The flexible foil 2 can comprise a plurality of thermistor temperature sensors 4 printed thereon. The flexible foil with temperature sensors 4 is usable in a battery pack for an electric vehicle including battery cells. The temperature sensors 4 are configured to at least provide temperature measurements at different locations of the battery pack. The flexible foil 2 is integrated within the battery pack and is configured to cover with a measurement surface area 6 at least a portion of a plurality of battery cells within the battery pack.

At least a plurality of temperature sensors 4 can be printed on the flexible foil 2, resulting in a distribution of temperature sensors 4 throughout the interior of the package. The temperature sensors 4 can be configured to contact the plurality of battery cells. In an example, the plurality of battery cells is a subset of the total number of battery cells within the battery pack. The plurality of battery cells can also be all or a majority of the individual battery cells within the battery pack. The temperature distribution throughout at least a part of the battery pack can be monitored at a battery cell level. In this way, localized peak temperatures, for instance during charging or operation at the battery cell level, can be detected in a timely fashion reducing the risk for damage.

The temperature sensor 4 has a thermistor structure with a temperature dependent resistance. The temperature sensor 4 includes two sensor electrodes 3a, 3b forming an intertwined finger structure 5 defining an elongated meandering gap with sensor material there between. In an example, the elongated gap has a gap length transverse to the electrode surfaces, wherein the gap length is at least ten times a minimum gap distance.

In the shown example of fig. 1, only one sensor 4 is shown, however multiple sensors 4 can be printed on the flexible foil 2. The flexible foil is flexible, e.g. allowing a bending radius "r" of less than five millimeters without (the sensors) losing essential functionality. Additionally or alternatively, the flexible foil 2 with the sensors is stretchable, e.g. allowing an elongation of a least ten percent without losing essential functionality. For example, the substrate comprises a rubber substrate, e.g. with polyurethane (TPU) or a silicone. The flexible foil 2 may include a dielectric matrix comprising for instance a rubber matrix. The sensor electrodes 3a, 3b may include a stretchable silver paste.

In an advantageous embodiment, the printed thermistor temperature sensor 4 is based on a negative temperature coefficient (NTC) resistor. When the dependence of the resistance of the thermistor 4 to the temperature is known, the resistance can be used as a measure for the temperature. In temperature sensing circuits using a thermistor of the NTC type, the monitored resistance decreases as temperature rises, wherein a sufficiently linear dependence of resistance with temperature can be provided. NTC materials used for such thermistor typically comprises a ceramic material. Optionally, a ceramic based NTC composite is used which is suitable for low temperature processing without negatively affecting its thermo-electrical properties. In this way, the thermistor temperature sensors 4 can be printed on widespread substrates in electronics, e.g. plastics such as PEN/PET, rubbers such as silicones or polyurethanes, composites boards such as FR4, high temperature foils e.g. polyimide, glass, or metal films with a dielectric coating. Hence, temperature sensors 4 with reliable thermos-electrical properties can be directly applied to the flexible foil, preferably printable under temperature conditions compatible with common industrial and printed electronics substrates.

By mixing the NTC material as micro-particles in a suitable dielectric matrix, the material becomes printable. The ceramic micro-particles may be processed at high temperature before forming an ink or paste by mixing with the matrix. The dielectric matrix may be mixed with a solvent that is evaporated after application of the material at low temperatures. By mixing the micro-particles such that they contact each other after application to form an interconnected network in the sensor material, it is found that the thermo-electric properties of the NTC material can be retained. Accordingly, a printable temperature sensor 4 is provided with reliable thermo-electrical properties which can be applied e.g. to conventional substrates under low temperature conditions.

To allow some bending and/or stretching of the flexible foil with printed sensors, the sensor material preferably has a relatively low thickness, e.g. between fifteen and one hundred micrometers. The layer of sensor material may be applied through printing. For example, the sensor material may be applied using stencil printing, e.g. wherein a stencil thickness is set between 25 - 300 micrometers, preferably fifty to one hundred fifty micrometers. For example, the sensor material is applied using screen printing. e.g. wherein a screen with a mesh of mesh size less than two hundred micrometers is used.

By providing the dielectric matrix an electrically insulating material, it may be ensured that conduction essentially only takes place via the NTC material of the micro-particles. For example the dielectric matrix may comprise polymeric or cross-linkable material. By using a material of the dielectric matrix having a neutral pH (potential of Hydrogen, Acidity), the matrix is typically charged neutral ensuring the micro-particles are not deteriorated by the matrix acidity. By using material for the dielectric matrix with a low affinity for humidity, e.g. dense and/or hydrophobic material, environmental effects on the conduction behavior may be avoided. For example the dielectric matrix may form a dense structure after crosslinking, e.g. allowing a maximum water uptake of less than half (mass) percent, preferably below a tenth of a percent. For example, the dielectric matrix comprises a precursor with an acrylate, epoxy, isoprene or benzocyclobutene moiety. For example, the dielectric matrix comprises a dielectric polymer such as polyurethane ether, polyisoprene, cellulose nitrate.

The electrodes are typically made of metal and may be deposited e.g. via sputtering of metals such as Al, Mo, Ag, Au, Cu. Preferably though, the electrodes are also printed, e.g. made from a silver paste or ink, or copper. For example the electrodes may have a layer thickness in a range between 0.1 to 10 µm. By forming an interdigitated finger electrode (driver) the electrode gap can relatively long transverse to the gap distance, e.g. at least ten times a minimum gap distance. This may lower the overall resistance of the sensor, which is preferably in a range between 10 kΩ and 10 MΩ. For example a film of sensor material may be formed between the electrode fingers with a cross-sectional area larger than 0.01 mm². For example, the cross-sectional area is as a product of the width and height of the film. Optionally, a resistance of the sensor layer can trimmed, e.g. by a laser to match a predetermined value within some percentage, e.g. 10%.

The ceramic particles may be shaped during sintering into filaments. In this way, filaments or nanowires can be created with high aspect ratio enabling high conductivity in the direction of the filaments.

Various types of substrates may be used for the flexible foil 2. For example the substrate may comprises or essentially consists of a ceramic, polymer or composite. For example, the substrate may comprises a ceramic consisting of a glass (SiO₂), silicon, alumina. Alternatively, the substrate comprises a printed circuit board (PCB), such as a fiber glass reinforced epoxide board, laminate type of PCB. Alternatively, the substrate comprises plastic such Polystyrene, Polyethylene terephthalate (PET), Polyethylene naphthalate (PEN), Polyimide (PI), Polycarbonate, Poly(methyl methacrylate) (PMMA).

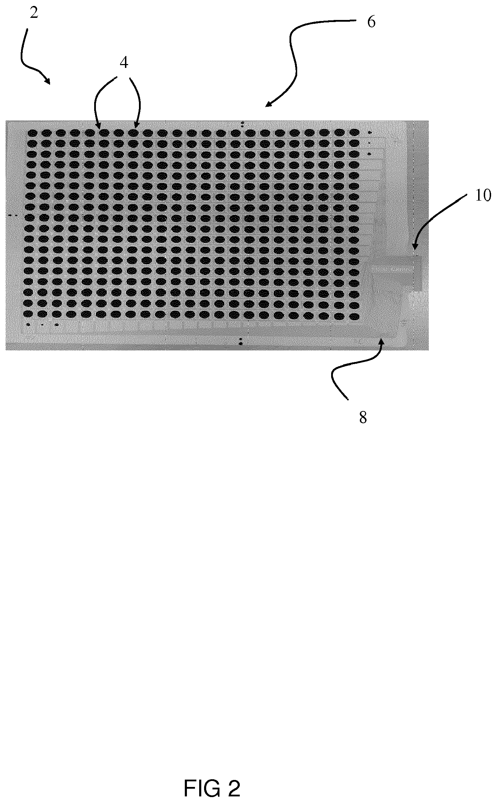

Fig. 2 shows a schematic diagram of an embodiment of a flexible foil 2 with printed thermistor temperature sensors 4. A plurality of temperature sensors 4 are printed on the flexible foil 2. The plurality of temperature sensors 4 form distributed measurement points in spaced apart relation to each other over a measurement surface area 6 of the flexible foil 2. Also electrical wiring 8 for the printed sensors, at least including thermistor temperature sensors 4, is printed on the flexible foil 2. In this way, measurement data from the printed sensors can be easily retrieved. An electrical connection portion 10 may be arranged for enabling connection to a controller of the battery pack or electrical vehicle.

The flexible foil is flexible and/or stretchable, e.g. having a thickness between twenty-five and two hundred micrometers. The flexible foil with sensors can allow a bending radius of less than five millimeters without losing essential functionality. In other or further embodiments, the substrate with the sensor is stretchable, e.g. allowing an elongation of a least ten percent without losing essential functionality. For example, the substrate comprises a rubber substrate, e.g. with thermal polyurethane or a silicone. For example, the matrix comprises a rubber material with electrodes comprising a stretchable silver paste.

Since the temperature of the plurality of individual battery cells in the battery pack can be monitored by means of the plurality of thermistor temperature sensors 4 on the flexible foil 2, the operational safety of the battery pack can be significantly improved. In this way, the individual battery cells can be protected against damage. The sensors can be directly printed on flexible foil 2. It is also envisaged that the flexible foil 2 with the plurality of temperature sensors is bonded or integrated with a heat exchanging member, such as e.g. a plate shaped heat sink or a heat sink foil. In this way, the flexible foil can easily follow a cooling circuit of the battery pack. In an example, the heat exchanging member acts as the flexible foil, wherein at least a plurality of thermistor temperature sensors 4 are printed on the heat exchanging member. As indicated above, the heat exchanging member can be configured to provide an active and/or passive cooling, i.e. actively or passively conduct heat away from the plurality of battery cells.

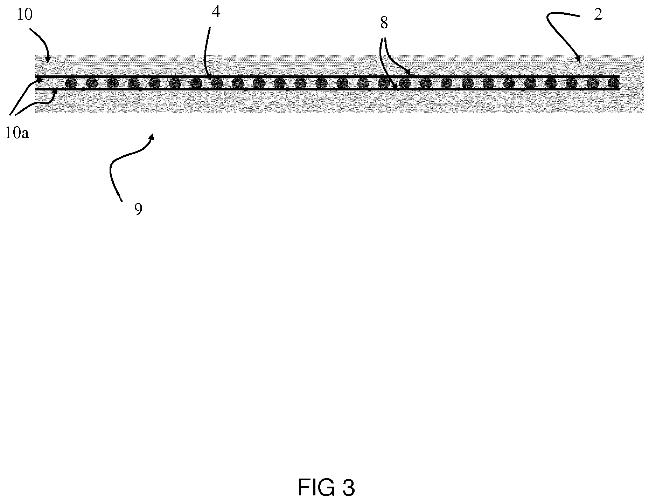

Fig. 3 shows a schematic diagram of an embodiment of a flexible foil 2 with printed thermistor temperature sensors 4. The flexible foil 2 includes a plurality of temperature sensors 4 arranged in one row. The plurality of temperature sensors 4 are configured to provide temperature measurements resulting from a temperature dependent resistance change (i.e. thermistor type). The temperature sensors 4 are arranged between leads 8a. The flexible foil 2 with sensors 4 further comprises an electrical connection portion 10 with printed contacts 10a. In this example, a thin measurement strip 9 is formed with a series of sensors in a single row such that temperature measurements along a line can be measured or characterized. The thin measurement strip 9 can ribbon around through the battery pack, allowing measurement of at least the temperature, at a battery cell level. Other sensors (e.g. pressure sensor) or elements (e.g. heating element) can also be integrated in the measurement strip 9. A plurality of rows can also be provided in the measurement strip 9. In an example, the measurement strip 9 further includes an adhesive on at least one side for facilitating attachment within the battery pack, e.g. for coupling to the plurality of battery cells.

The flexible foil 2 with the printed sensors 4 can easily be integrated into the battery pack, providing a direct and/or instantaneous measurement of the temperature at or near the plurality of battery cells. Furthermore, non-dissipated temperatures can be obtained having a high spatial resolution within the battery pack. The total weight of the battery pack can be significantly reduced when employing the lightweight flexible foil 2 with the printed sensors 4 for obtaining distributed measurement points within the battery pack. Also, distributed measurement points within the package (of at least the temperature) are obtained at a low-cost.

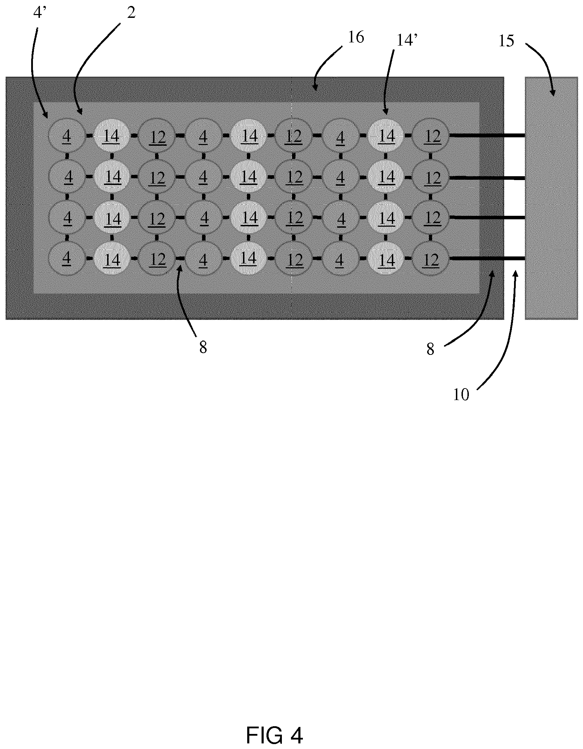

Fig. 4 shows a schematic diagram of an embodiment of a flexible foil 2 with sensors. A plurality of temperature sensors 4, heating elements 12, and pressure sensors 14 are printed on the flexible foil 2. The plurality of heating elements 12 are different than the plurality of thermistor temperature sensors 4. Within the measurement surface area 6 of the flexible foil 2, a first group of plurality of sensors 4' of the flexible foil 2 is configured to provide temperature measurements at different locations in the measurement surface area 6, and a second group of plurality of sensors 14' of the flexible foil 2 is configured to provide pressure measurements at different locations in the measurement surface area 6.

Additionally or alternatively, a plurality of resistors can be switchable to a heating state, in which the resistors are used as heating elements for heating the battery pack. At low temperatures (e.g. below 0 °C), heating up battery cells, for example in case of a solid-state battery pack, can be beneficial for the performance and/or efficiency provided by the battery pack.

The flexible foil 2 with plurality of sensors can be directly or indirectly coupled to the plurality of battery cells 16. Integrated electrical wiring 8 is provided for connecting the plurality of temperature sensors 4, pressure sensors 14 and heater elements to an electrical connection portion 10. The electrical connection portion 10 is in connection with controller 15 configured to enable control and/or measurement via feedback.

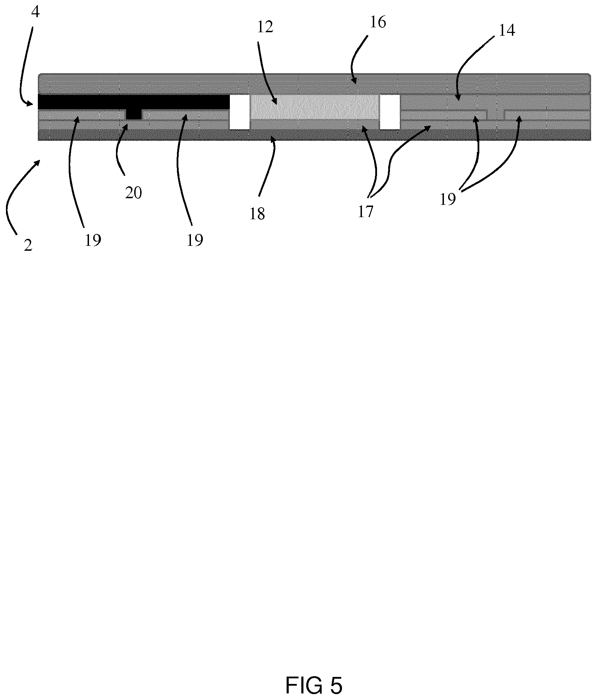

Fig. 5 shows a cross-sectional view of an embodiment of a flexible foil 2 integrated with a heat exchanging member 18. In this example, the heat exchanging member 18 is a heat sink foil 18. The heat sink foil 18 can be flexible allowing it to follow the shape of the outer surface of the battery cell 16. The flexibility of the flexible foil 2 can enable easy integration within the battery pack. In this example, only one battery cell 16 is shown, however, the heat sink foil can be coupled to a plurality of battery cells 16 within the battery pack. Furthermore, in the shown example, the battery cell 16 has a straight surface. Other shapes are also possible. For instance the battery cell can be cylindrical and/or have a curved surface. The flexible foil 2 can be wrapped around at least a portion of an exterior side surface extending between a first end and a second end of the battery cell.

In the shown embodiment of fig. 5, a heat sink foil configuration is shown with at least one printed temperature sensor 4, at least one heating element 12 and at least one pressure sensor 14 arranged between a battery cell 16 and the heat sink foil 18. A thermal isolation layer 20 is provided between the heat sink foil 18 and the at least one printed temperature sensor 4. Wiring or electrical leads 19 are provided for the at least one printed temperature sensor 4 and pressure sensor 14. Furthermore, a dielectric layer 17 is provided between the pressure sensor 14 and the heat sink foil 18. The heat sink foil 18 can for instance be made out of a thermally conductive material such as copper or aluminum. The at least one temperature sensor 4, heating element 12 and pressure sensor 14 can be printed on the heat sink foil 18. Hence, the heat sink foil 18 can act as the flexible foil 2 on which the plurality of sensors are printed, at least enabling distributed temperature measurements.

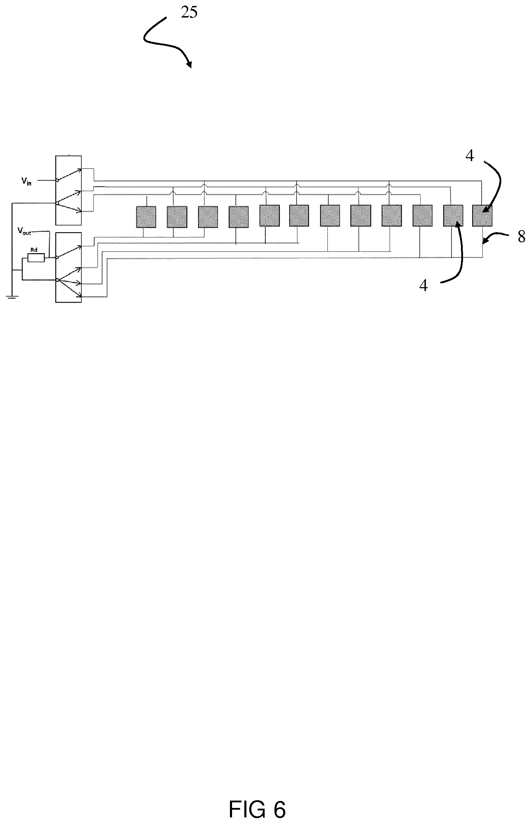

Fig. 6 shows a schematic diagram of a circuit 25 involving a plurality of sensors. The circuit 25 is printed on the flexible foil 2. In this exemplary circuit 25, an array of temperature sensors is provided wherein each temperature sensor may be integrated in series with a thin film transistor. Passive matrix readout may also be used. This allows each sensor to be individually addressed. A temperature sensitive array can be formed by a plurality of sensors 4 on the flexible foil 2 as described herein. The wiring 8 of the circuit 25 can also be printable on the flexible foil 2. It will be appreciated that the circuit 25 may also be directly printed on the heat exchanging member 18.

The thermistor sensor 4 on the flexible foil 2 may comprise screen printed silver electrodes with therebetween the temperature sensitive material. An electrical connection portion or external leads may be provided which allow connection to a readout unit, such as a multimeter. A temperature dependent resistance of the thermistor sensors 4 may result in a corresponding variable output voltage. In an example, an operational amplifier (op-amp) is used for signal amplification and/or noise reduction by providing a high input buffer stage. The thermistor sensor 4 can be driven by applying a constant voltage. Alternatively a constant current source can be used in conjunction with a current to voltage circuit configuration. For example, a voltage ranging between one and five Volt can be applied to the thermistor sensor 4. Other values are also possible depending on the employed electrical circuit 25. The temperature of the thermistor sensors 4 can be extracted by using a Steinhart-Hart equation. For example, the parameters may be been extracted for a specific ink composition of the sensor material. Other techniques, models and/or equations may also be used for calculating or estimating the temperature resistance dependence. The circuit 25 printed on the flexible foil 2 may also include other elements, such as heating elements, pressure sensors, etc.

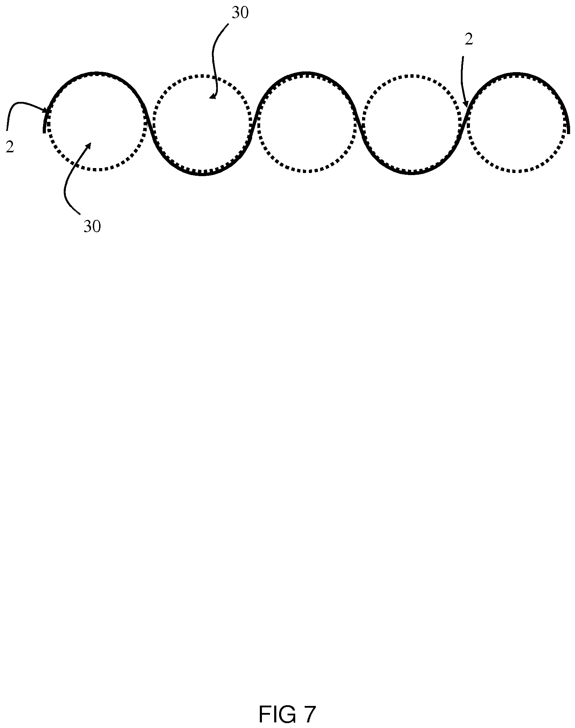

Fig. 7 shows a schematic diagram of an embodiment of a flexible foil 2 with printed sensors wrapped around a plurality of battery cells 30 of a battery pack. The flexible foil 2 with the sensors can provide a flexible sensing mat or strip, which can arranged within the battery pack for being in contact with the plurality of battery cells 30. The battery pack can include one or more flexible foils with sensors that are meandered throughout the battery pack, optionally attached to or integrated with the heat exchanging member. By employing the flexible foil 2 with sensors, monitoring of at least the temperature within the battery pack can be improved. In this way, the thermal management and safety of the battery pack can be enhanced.

The flexible foil 2 can also be attached to a heat exchanging member following the same path between the plurality of battery cells 30. Alternatively, the flexible foil 2 can also be integrated with or directly printed on the heat exchanging member. The heat exchanging member can be a foil or plate with the flexible foil coupled to or integrated with at least one of its major surfaces. In an advantageous embodiment, the heat exchanging member is a heat sink foil 18 configured to act as the flexible foil 2.

As shown in fig. 7, the flexible foil 2 is disposed between the battery cells 30 following a meandering path such that a plurality of contours of the flexible foil 2 coincide with at least an outer portion the plurality of battery cells 30.The flexible foil 2 follows a continuous path having a curved shape. It will be appreciated that the plurality of battery cells 30 can be a subset of the total amount of battery cells 30 within the battery pack.

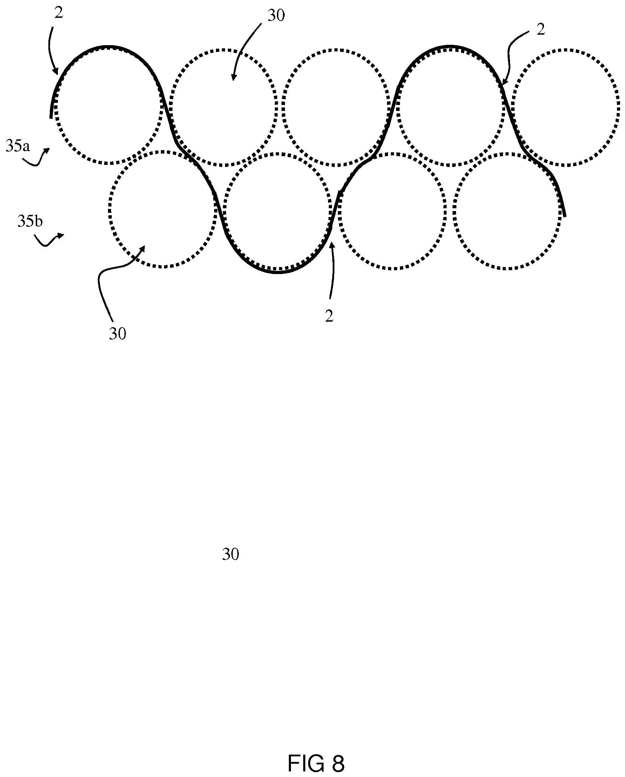

Fig. 8 shows a schematic diagram of an embodiment of a flexible foil 2 with printed sensors wrapped around a plurality of battery cells 30. The flexible foil 2 comprises of a first plurality of contours coinciding with portions of battery cells 30a of a first row 35a of battery cells 30 and a second plurality of contours coinciding with portions of battery cells 30b of a second row 35b of battery cells 30. The sensors on the flexible foil 2 are alternatingly coupled to battery cells 30a of the first row 35a and battery cells 30b of the second row 35b. A radius of curvature corresponding to each of said first and second pluralities of contours may substantially corresponds to an outer radius of curvature of plurality of battery cells 30. The flexible foil 2 can be attached to or integrated with the heat exchanging member. In an example, the flexible foil 2 is sandwiched between battery cells 30 and the heat exchanging member 18 (e.g. heat sink foil, heat transfer plate, etc.). The heat exchanging member may be similarly arranged within the battery pack.

The flexible foil 2 can be a multilayer foil comprising a base layer, a screen printed electrode layer and a screen printed thermal sensing layer comprising the printed sensors (at least including thermistor temperature sensors 4). The flexible foil 2 interposed between the plurality of battery cells contacts a portion of the plurality of battery cells.

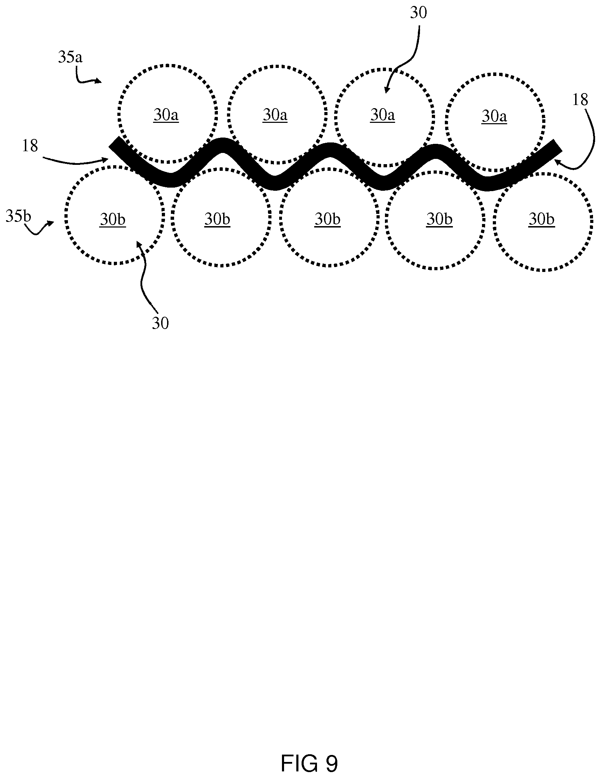

Fig. 9 shows a schematic diagram of an embodiment of a flexible foil 2 with printed sensors wrapped around a plurality of battery cells 30. In this embodiment, the plurality of sensors are directly printed on the heat exchanging member 18 acting as the flexible foil 2. The heat exchanging member is a heat sink foil 18 arranged to follow a meandering path, contacting the plurality of the battery cells 30a, 30b in the first row 35a and the second row 35b. When meandering is done for a prismatic or pouch shaped pack of cells, the sensor has the possibility to touch two batteries simultaneously. This can be used as way to monitor two cells at the same time. The number of sensors needed would be reduced (or halved).

In an advantageous embodiment, the heat sink foil 18 is made out of copper. Other materials such as aluminum can also be used. Additionally or alternatively, the heat sink foil is a multilayer foil. An additional thermal isolation layer can be provided for separating the printed sensors from the heat conducting layer of the heat sink foil 18.

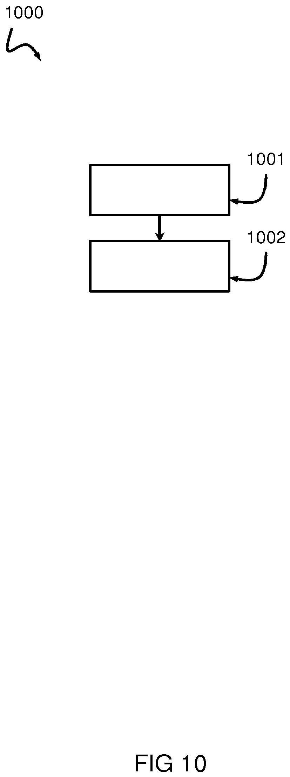

Fig. 10 shows a schematic diagram of a method 1000 for providing temperature measurements within a battery pack of an electric vehicle. The battery pack including battery cells 30 and thermistor temperature sensors 4 configured to at least provide temperature measurements at different locations of the battery pack. In a first step 1001, a flexible foil with a plurality of temperature sensors 4 printed thereon is provided. The plurality of temperature sensors 4 form distributed measurement points in spaced apart relation to each other over a measurement surface area of the flexible foil 2. In a second step 1002, at least a portion of a plurality of battery cells 30 within the battery pack is covered with the measurement surface area of the flexible foil 2 to thereby measure temperature at different locations within the battery pack.

The flexible foil 2 with the sensors can provide for a sensor sheet/strip for an automotive battery, wherein the thermistor temperature sensors 4 define the measurement surface area 6. At least within the battery pack, in one or more modules of the battery pack, the sensor sheet can be wrapped. In an advantageous embodiment, the flexible foil 2 is a heat sink foil 18. In between rows of battery cells 30a, 30b, the heat sink foil 18 with printed sensors is arranged for obtaining temperature measurements inside of the battery pack. In an example, the heat sink foil further includes means for guiding a cooling liquid therethrough for enhancing the cooling of the batteries under some conditions (e.g. too high temperature).

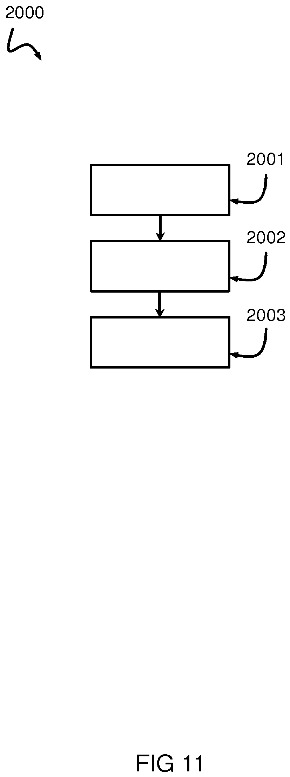

Fig. 11 shows a schematic diagram of a method 2000 for heating a battery pack of an electric vehicle. In a first step 2001, an indicative value for a temperature within the battery pack is determined. In a second step 2002, it is determined whether the indicative value for the temperature within the battery pack is lower than a threshold value, indicating that heating of the battery pack is desired. In a third step 2003, if indicated that heating of the battery pack is desired, the plurality of temperature sensors are employed as heating elements for heating the battery pack. Optionally, the temperature is monitored until a desired temperature is reached.

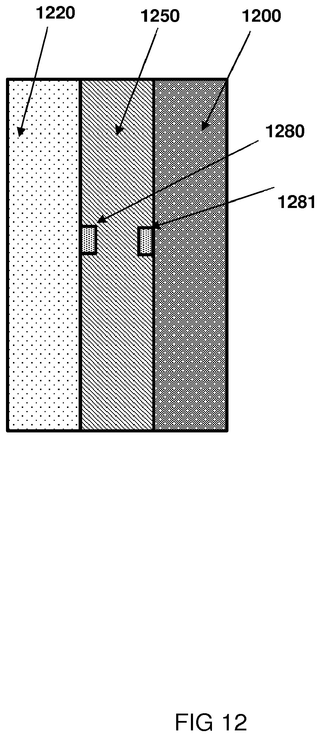

Fig. 12 shows a schematic setup for a temperature sensor setup for a battery that is receiving active cooling. Here a problem exists of providing a thermosensor that sufficiently in contact with potential heating areas in the battery, but yet is conveniently constructed. This is provided by an integral connection to the active cooling circuit 1200. To this end, temperature sensors are printed on a flexible foil 1250 having a thickness and slightly thermal isolating properties, so that a thermal gradient is provided by a heated battery 1220 and cooling circuit 1200. that is in contact with a cooling substrate. The thermal foil is preferably provided with on both sides with temperature sensors 1280 and 1281 have a thermistor structure with a temperature dependent resistance. By using more temperature sensor (one attached to the outside of the battery) and a thin thermal insulation and one on the other side on attached to the cooling foil side, heat flux can be measured from the temperature difference. The construction of the sensing foil may be such that the temperature sensor is isolated from the cooling foil by a local isolating patch, and not on the entirety of the foil. Attachment can be provided by gluing, welding, clamping or snuggly fitting This may allow to measure the core temperature of the battery by approximation even if the absolute temperatures of the sensors are different due to a different coolant temperature. By a temperature sensor in contact with the battery a reliable thermal measurement can be provided of the heating status of the battery, without compromise due to the cooling circuit 1200. On the other hand, the thermal isolation is limited, as a trade of to cool battery layer 1220. By comparing the outcomes of both sensors 1280 and 1281, a thermal gradient is indicative of the heating status of the battery.

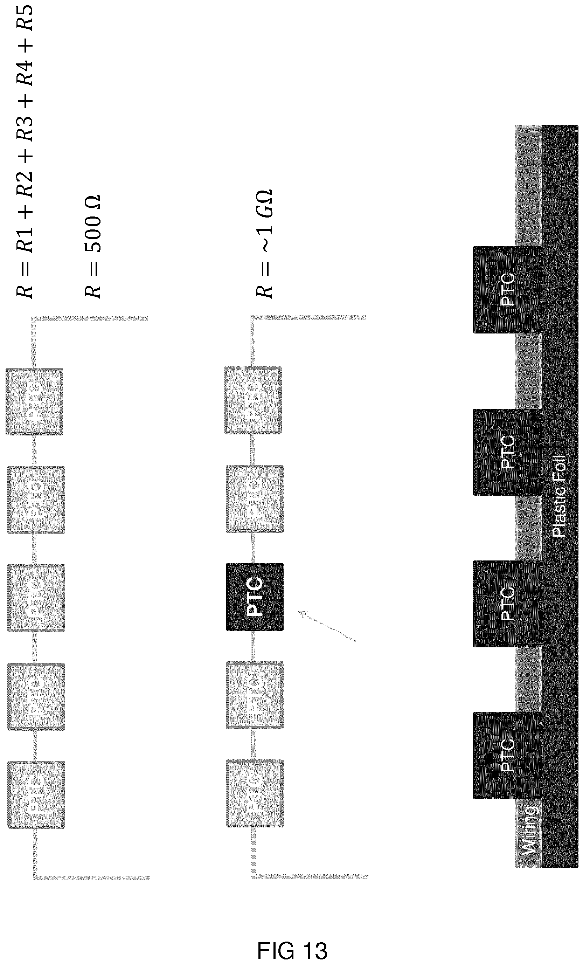

In Figure 13, furthermore, a schematic setup is provided for a serial arrayed circuit, wherein the temperature sensors are PTC (Positive temperature constant) elements. That is that by overheating, the resistance of a chain significantly increases significantly, for example, from 100 Ohm to 1 GOhm, if a battery overheats and the PTC element will increase in temperature. By grouping battery elements one can identify and control faulty battery units in the sensor network. E.g. if a unit is overheated, this unit can be electrically shut off from the power grid formed by the battery elements. In an example, the PTC elements are integrated on a foil, e.g. a polymer foil, and connected by suitable grid wiring, that may or may not be corresponding to a grid network of suitably connected battery elements that are in thermal connection with the PTC elements.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A battery pack including battery cells and,
wherein a plurality of resistors are printed on one or more flexible foils, the plurality of resistors formed in a distributed fashion in spaced apart relation to each other over a surface area of the one or more flexible foils, wherein the plurality of resistors have a temperature dependent resistance, and
wherein the one or more flexible foils are integrated within the battery pack and are configured to cover at least a portion of a plurality of battery cells within the battery pack
and wherein a controller is coupled to the plurality of resistors to control the battery cells in the battery pack.

2. Battery pack according to claim 1, wherein the resistors are electrically coupled as temperature sensors, to provide a temperature measurement at different locations of the battery pack; wherein the controller switches the battery cells within the battery pack in dependence of the temperature measurement.

3. Battery pack according to claim 1, wherein the resistors are provided as positive temperature constant resistors, wherein, in case of normal heating, the positive constant resistors do not exceed a threshold resistance value, and in case of overheating of a battery cell, the positive constant resistor exceeds a threshold resistive value, a battery cell network is shut off by the controller.

4. Battery pack according to claim 1, wherein the flexible foil is integrated with or coupled to a heat exchanging member, wherein the heat exchanging member is arranged to snuggly fit around the plurality of battery cells such as to remove heat from the plurality of battery cells.

5. Battery pack according to any one of the preceding claims, wherein the plurality of resistors are switchable to a heating state, in which the temperature sensors are used as heating elements for heating the battery pack.

6. Battery pack according to any one of the preceding claims, wherein, within the measurement surface area of the flexible foil, a first group of plurality of sensors of the flexible foil is configured to provide temperature measurements, and a second group of plurality of sensors of the flexible foil is configured to provide pressure measurements.

7. Battery pack according to any one of the preceding claims, wherein the flexible foil is guided in a meandering path alternatingly around battery cells.

8. Battery pack according to any one of the preceding claims, wherein the battery pack comprises at least one row of battery cells, the battery cells having a cylindrical, prismatic, or pouch shape and being placed consecutively next to each other in the at least one row, wherein the flexible foil is curved along an alternating side of the successive battery cells in the at least one row.

9. Battery pack according to any one of the preceding claims, wherein the plurality of battery cells are arranged into at least a first row and an adjacent second row, the first and second rows being offset from each other, wherein the flexible foil is interposed at least between the first row and the second row.

10. Battery pack according to any one of the preceding claims, wherein the flexible foil follows a complementary shape with respect to at least a portion of the plurality of battery cells for extending along at least a portion of an outer contour of the plurality of battery cells.

11. Battery pack according to any one of the claims 4-10, wherein the heat exchanging member is a cooling plate providing at least passive cooling by dissipating generated heat away from battery cells within the battery pack.

12. Battery pack according to any one of the claims 4-11, wherein the heat exchanging member is configured to provide at least active cooling by means of a cooling fluid, wherein the heat exchanging member comprises at least one channel configured to enable cooling fluid to flow therethrough.

13. Battery pack according to any one of the preceding claims, wherein the battery pack includes a plurality of flexible foils.

14. A method for providing temperature measurements within a battery pack of an electric vehicle, the battery pack including battery cells and temperature sensors configured to at least provide temperature measurements at different locations of the battery pack, the method comprising:
providing a flexible foil with a plurality of temperature sensors printed thereon, the plurality of temperature sensors forming distributed measurement points in spaced apart relation to each other over a measurement surface area of the flexible foil, wherein the plurality of temperature sensors have a thermistor structure with a temperature dependent resistance
covering, with the measurement surface area of the flexible foil, at least a portion of a plurality of battery cells within the battery pack to thereby measure temperature at different locations within the battery pack.

15. Method according to claim 14, wherein the flexible foil is integrated with or coupled to a heat exchanging member wherein the heat exchanging member is arranged to snuggly fit around the plurality of battery cells such as to remove heat from the plurality of battery cells.

16. A method for heating a battery pack of an electric vehicle, the battery pack including battery cells and temperature sensors configured to at least provide temperature measurements at different locations of the battery pack, wherein a plurality of temperature sensors are printed on a flexible foil, the plurality of temperature sensors forming distributed measurement points in spaced apart relation to each other over a measurement surface area of the flexible foil, and wherein the flexible foil is integrated within the battery pack and is configured to cover with the measurement surface area at least a portion of a plurality of battery cells within the battery pack, wherein the plurality of temperature sensors have a thermistor structure with a temperature dependent resistance, wherein the method further includes:
determining an indicative value for a temperature within the battery pack,
determine whether the indicative value for the temperature within the battery pack is lower than a threshold value, indicating that heating of the battery pack is desired, and
employing the plurality of temperature sensors as heating elements for heating the battery pack.
